# EUROPEAN PATENT APPLICATION

(11) **EP 2 727 719 A1**
(43) Date of publication of application: **07.05.2014**
(21) Application number: 13190454.2
(22) Date of filing: 28.10.2013
(51) Int. Cl.: B32B 5/02, B32B 1/08, F16L 11/04, F16L 11/08

(54) **Refrigerant hose**

(30) Priority: 31.10.2012 US 201261720668 P
(71) Applicant: Veyance Technologies, Inc., Fairlawn, OH 44333-3023 (US)
(72) Inventor: Haines, Bradley James, WI 53590 Sun Prairie (US); Mennig, Gary James, WI 53916 Beaver Dam (US); Henry, Brian, WI 53590 Sun Prairie (US)
(74) Representative: DREISS Patentanwälte PartG mbB

(57) **Abstract**

The refrigerant hose of this invention offers good flexibility, increased temperature resistance, excellent permeation resistance and can be commercially manufactured at a reduced cost. This refrigerant hose is utilizes a tie-layer which is comprised of a butyl rubber and a cover layer which is comprised of ethylene-propylene-diene monomer rubber (EPDM). The reinforcing layer is the hose of this invention is typically a polyester or aramid fabric which is woven in a 1-over/1-under pattern.

## Description

### Field of the Invention

The present invention is directed to a hose suitable for use in refrigerant systems such as vehicle, industrial, and residential refrigerant systems, such as automotive air conditioning systems. The hose is a combination of elastomeric materials to provide flexibility and thermoplastic materials to provide impermeability.

### Background of the Invention

Hoses are used for transporting refrigerants in vehicle air conditioning systems, and in industrial and residential refrigerant systems and serve the purpose of joining the principal operating components of the refrigerating device.

These hoses should have good flexibility, high strength, the ability to bend to small radii without kinking, small outside diameter in relation to inside diameter and impermeability to the fluids involved. Refrigeration hoses are subjected to temperature extremes in under-the-hood applications and accordingly must be capable of providing a long service life in an environment under which they are repeatedly subjected to both high and low temperatures.

The normal operating temperatures encountered by air conditioning hose assemblies employed in automotive air conditioning applications generally range from about -30°C to about 120°C. Typical design specifications call for such refrigerant hose to be capable of withstanding operation temperatures which are within the range of about -40°C to 150°C. The higher temperatures are due mainly to the location of the system proximate to the engine as well as from the heat generated in compressing the refrigerant as a gas. Additionally, such hoses must be capable of being tightly attached to refrigeration device components in a leak proof fashion (meeting requirements for proper coupling attachment).

These refrigerant hoses, such as automotive air conditioner hoses, generally have a three-layer laminar construction consisting of an innermost layer, a reinforcing layer, and an outermost cover layer. The innermost tubular layer of such hose is typically formed of an elastomeric material intended to keep the refrigerant fluid and compressor lubricant in the hose while keeping moisture and air out.

A layer of reinforcing braiding is wound upon the outside surface of the inner tube. The reinforcing fiber layer usually is a mesh structure formed from a braided organic yarn, such as polyester fiber, rayon fiber, or nylon fiber.

The braiding fibers are typically comprised of a polyester, such as polyethylene terphthalate (PET) or polyethylene naphthalate (PEN). An outer layer of elastomer resistant to ozone, engine oil and other contaminating materials likely to be present in the engine compartment is typically extruded over the braided reinforcement. Generally, the inner and outer layers of the tube are formed of rubber, including butyl rubbers, ethylene propylene diene rubber (EPDM), chloroprene rubber (CR), nitrile rubbers (NBR), hydrogenated nitrile rubbers (HNBR), or ethylene acrylic copolymer rubber. The inner layer of barrier hose is typically comprised of CR or butyl rubber. The outer cover typically is formed of EPDM, CR, butyl rubbers, or ethylene acrylic copolymer rubber. Adhesion layers are typically employed between the barrier and reinforcing layers of the hose.

The hoses used for transporting refrigerants generally have a high degree of flexibility which facilitates handling them and implementing their use in cooling devices. However, rubbery materials that provide the needed degree of flexibility generally tend to have high gas permeability. Attempts to improve the resistance of conventional rubber hoses to refrigerant permeation have been made by incorporating polyamide layers, such as nylon 6, nylon 66, modified nylon 6, or alloys of nylon 6, etc, as an inner layer. However, the use of such polyamide layers, while reducing permeation rates, also reduces the flexibility of the hoses. To achieve an acceptable compromise of the required characteristics, the thickness of a nylon inner core layer is conventionally at least 0.1 mm (0.004 inch). United States Patent 4,633,912 discloses such a hose having a polyamide blend cores tube.

Hoses may be characterized as barrier or veneer hose, the distinction between the two being the type of material forming the innermost layer. Barrier hoses have the innermost layer formed of an elastomeric material and a barrier layer located outward of the innermost layer. In hoses where the barrier layer is the innermost layer, the hose is referred to a veneer hose. Some applications may use either type of hose, such as fuel hose, while other applications may require a specific internal material and thus only one type of hose would be appropriate.

United States Patent 4,633,912 discloses a composite hose for Freon gas, comprising a polyamide core tube, an elastic friction layer having the specific composition and being directly provided on a core tube, a first reinforcement strand layer, an adhesive barrier friction layer, a second reinforcement strand layer, and then a cover layer. The elastic friction layer which is positioned directly on the core tube comprises (a) a base rubber selected from EPDM, a copolymer of butadiene, polychloroprene, polybutadiene, polyisoprene or a mixture thereof, (b) a calcium ion source, (c) resorcinol or a phenol-based adhesive system, and (d) a peroxide or a sulfuric vulcanizing agent. The calcium source (b) is said to make better adhesion to a polyamide of the core tube. The adhesive barrier friction layer being present between the first and second reinforcement strand layers is provided to minimize a friction of the strands, and is made of a copolymer of ethylene and acrylic acid. For the cover layer, a halogenated butyl rubber containing bis-dienophile as a crosslinking agent is used.

United States Patent 5,488,974 discloses a composite hose for automotive air conditioning systems. This hose consists of the innermost layer, the intermediate rubber layer, a fibrous reinforcement layer and an external rubber layer, each of which is formed in this order from the inside. The innermost layer is formed of a modified polyamide obtainable by blending of a polyamide and a carboxyl-containing modified polyolefin, and the intermediate rubber layer is formed of a rubber composition obtainable by a blend of 10 to 50 parts by weight of silicic acid or a salt thereof and 5 to 15 parts by weight of a brominated alkylphenol formaldehyde resin per 100 parts of the rubber material obtainable by blending butyl rubber and a halogenated butyl rubber at a weight ratio of 50/50 to 0/100.

United States Patent 6,376,036 relates to a composite flexible hose, preferably for use in automotive air conditioning systems, with improved thermal resistance. The hose consists of an innermost core layer, a friction rubber layer, an intermediate reinforcement layer, and an external cover layer. The innermost layer is a non-plasticized polyamide mixed with a minor portion of polyolefin corresponding to the main rubber constituent of the friction coat layer. The friction coating is formed of a rubber composite of two EPDM rubbers at a weight ratio of 50/50 and 75 parts by weight of carbon black. The intermediate fibrous reinforcement layer is formed of aramid. The external layer is an acrylate rubber comprising a blend of two ethylene acrylates at a weight ratio of 50/50 and 80 parts by weight of carbon black.

United States Patent 6,941,975 discloses a hose suitable for use in refrigerant systems. This hose has a barrier layer formed of at least two layers of thermoplastic resin. At least one of the layers is a vinyl resin. The resins are selected so that the hose has a permeation rate of virtually zero. United States Patent 6,941,975 more specifically discloses a hose comprising an inner barrier layer, a radially outer intermediate layer bonded directly to the inner barrier layer, a reinforcing layer, and a cover layer, wherein the barrier layer is formed of at least two resin layers and wherein the two resin layers are formed of two different materials and at least one of the resin layers is a vinyl resin.

### Summary of the Invention

The refrigerant hose of this invention offers good flexibility, increased temperature resistance, excellent permeation resistance and can be commercially manufactured at a reduced cost. This refrigerant hose utilizes a tube comprised of EPDM rubber, a tie-layer which is comprised of a butyl rubber and a cover layer which is comprised of ethylene-propylene-diene monomer rubber (EPDM). The reinforcing layer in the hose of this invention is typically a polyester or aramid fabric which is woven in a 1-over/1-under pattern. The present invention more specifically relates to a refrigerant hose comprising: (a) a core layer, wherein the core layer is comprised of rubbery polymer; (b) a permeation inhibiting layer which is over the core layer, wherein the permeation inhibiting layer is comprised of one or more layers of a thermoplastic polymer; (c) a tie-layer which is over the permeation inhibiting layer, wherein the tie-layer is comprised of a butyl rubber; (d) a reinforcing layer which is over tie-layer, wherein the reinforcing layer is a woven fabric which is comprised of glass fibers, cotton fibers, polyester fibers, or aramid fibers; and (e) a cover layer which is over the reinforcing layer, wherein the cover layer is comprised of ethylene-propylene-diene monomer rubber.

### Brief Description of the Drawings

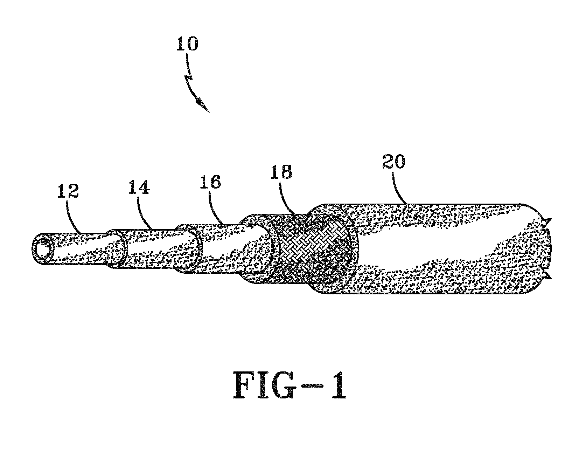

Figure 1 is a cut-away view of a refrigerant hose of this invention which illustrates the various layers therein.

### Detailed Description of the Invention

The refrigerant hose 10 of the present invention is illustrated in FIG. 1. The hose 10 has a core layer 12, relative to the radial direction of the hose and the longitudinal hose axis. The core layer 12 is formed from an elastomeric material which is typically a natural or synthetic rubber. Over the core layer 12 is a permeation inhibiting layer 14. The permeation inhibiting layer 14 is covered by the tie-layer 16 which is comprised of a butyl rubber. The tie-layer is covered by a reinforcing layer 18 and the reinforcing layer is covered by the cover layer 20.

The core layer 12 is formed from an elastomeric material which is typically natural rubber or a synthetic rubber. For instance, the elastomeric material utilized in making the core layer can be a chloroprene rubber, a nitrile rubber (NBR), an ethylene-propylene rubber, an ethylene propylene diene monomer rubber (EPDM), a butyl rubber, a chlorosulfonated polyethylene rubber (CSM), an ethylene-acrylic rubber (AEM), a chlorinated polyethylene rubber (CPE), or a brominated isobutylene-paramethylstyrene (BIMS). The core layer 12 may also be formed from thermoplastic elastomers or thermoplastic vulcanizates such as polyproplene, polyethylene, or other polyolefins blended with EPDM, NBR, a butyl rubber, or an acrylic rubber. The core layer 12 will preferably be comprised of an EPDM rubber or a blend of EPDM rubber with a butyl rubber or a halobutyl rubber and will typically have a thickness which is within the range of 0.025 inch (0.635 mm) to 0.030 inch (0.762 mm).

The permeation inhibiting layer 14 is typically comprised of one or more layers of a thermoplastic material having a low permeation rate. Suitable low permeability thermoplastic materials include polyolefin thermoplastic resins, such as high density polyethylene (HDPE), ultrahigh molecular weight polyethylene (UHMWPE), polypropylene (PP), and ethylene propylene copolymer thermoplastic resin; and polyamide thermoplastic resins, such as nylon 6 (N6), nylon 66 (N66), nylon 46 (N46), nylon 11 (N11), nylon 12 (N12), nylon 610 (N610), nylon 612 (N612), nylon 6/66 copolymer (N6/66), nylon 6/66/610 copolymer (N6/66/610), nylon MXD6 (MXD6), nylon 6T, nylon 6/6T copolymer, nylon 66/PP copolymer, nylon 66/PPS copolymer, and/or modified versions of these nylons. The nylon can also be selected from the group consisting of PA6, PA66, PA610, PA612, and PA11. To achieve a low permeation of the completed hose, when using a polyamide resin, or a blend of polyamide resins, the polyamide is preferably non-plasticized. The addition of a plasticizer to the polyamide improves the flexibility of the material; however, it also decreases the permeability characteristics of the nylon. It is highly preferred to utilize a nylon as the permeation inhibiting layer and for the permeation inhibiting layer to be from 0.002 inch (0.05 mm) to 0.01 inch (0.254 mm) thick. For instance, in many cases the permeation inhibiting layer will be from 0.003 inch (0.0762 mm) to 0.005 inch (0.127 mm) thick.

The tie layer 16 is comprised of a butyl rubber or a halobutyl rubber and will typically be from 0.02 inch (0.508 mm) to 0.05 inch (1.27 mm) thick. The butyl rubbersthat can be utilized are copolymers of isobutylene and isoprene. The halobutyl rubbers that can be used include bromobutyl rubbers and chlorobutyl rubbers.

The reinforcing layer 18 may be formed by braiding, spiraling, knitting, or helical knitting of yarn. The yarn may be selected from conventional hose reinforcing yarns, such as glass, cotton, polyester, or aramid fibers, or a blend of any of these fibers. The reinforcing layer in the hose of this invention is typically a polyester or aramid fabric which is woven in a 1-over/1-under pattern. Polyester fabric, such as polyethylene terephthalate fabric and polyethylene naphthalate fabric, is typically preferred with polyethylene terephthalate fabric being most typical for economic reasons.

The cover layer 20 employed in the practice of this invention is comprised of an EPDM rubber and is from 0.03 inch (0.762 mm) to 0.06 inch (1.524 mm) thick.

The hose 10 typically has a permeation rate of not greater than 0.001 g/cm/day of R134 refrigerant, with a preferred permeation rate of not greater than 0.0003 g/cm/day of R134 refrigerant. A permeation rate this low is generally considered to be a zero permeation rate. Conventionally, to obtain permeation rates this low, a thin metallic layer is employed in the hose. The present invention achieves a very low, to zero, permeation rate without the use of a metallic foil or layer within the hose.

The thickness of the differing layers of the hose is linked to the desired characteristics, as excessively thin wall thicknesses or excessively thick wall thicknesses present flexibility or kinking problems or coupling compatibility problems of the final hose composite. For every thousandths of a centimeter increase in the thickness of the hose, the flexibility of the hose decreases. Such hoses will typically have an inside diameter which is within the range of about 5 mm to about 30 mm. In many cases the hoses of this invention will have an inside diameter which is within the range of about 6 mm to about 25 mm. The wall thickness of the hose is within the range of 2.72 mm and 3.73 mm. But, as every incremental thickness of the hose decreases the desired properties of the hose, the smallest wall thickness, without a loss of impermeability and creation of kinking problems, is preferred. The preferred wall thickness for a 13 mm ID hose of this invention is normally within the range of about 2.5 mm to 3.5 mm and will typically be about 3.17 mm.

The wall thicknesses of the core layer are typically within the range of 0.14 mm to 0.16 mm, with a preferred thickness of about 0.15 mm, for a 13 mm ID hose. This thickness provides the required flexibility without kinking. One skilled in this art will appreciate that for other size hoses, the wall thickness for the polyamide core may differ, yet still provide the necessary flex, impermeability and freedom from kinking.

The rubber components utilized in the hose of this invention can be cured with conventional peroxide curatives. For example peroxides such as dicumyl peroxide, .α-α-bis(t-butylperoxide)diisopropylbenzene, benzoyl peroxide, 2,4-dichlorobenzoyl peroxide, 1,1-bis(t-butylperoxy)3,3,5-trimethylcyclohexane, 2,5-dimethyl-2,5-bis(t-butylperoxy)hexane, 2,5-dimethyl-2,5-bis(t-butylperoxy)hexyne-3, and n-butyl 4,4-bis(t-butylperoxy)valerate can be employer in curing the rubber components of the hose. The most preferred and commercially available peroxide curatives are Percadox™ 14/40 from Noury Chemical Corporation and Vul-Cup™ from Penwalt Corporation. From 1 to about 10 parts of peroxide are generally utilized based on 100 parts of base polymer.

Peroxides are preferred as the curative since they are less sensitive to premature crosslinking (scorch). The rubbery components employed in the hose of this invention can also contain various additives in conventional or suitable amounts. Such additives may include, and are not limited to retardants to prevent an unduly quick cure, antioxidants, processing aids, reinforcing agents and fillers, such as carbon black, silica, and the like.

The adhesive systems useful in adhering the various component layers to other component layers in accordance with this invention are the conventionally known adhesive systems for use with peroxide cured elastomers. For example, maleinized 1,2-polybutadiene resin., and various plasticizers.

While certain representative embodiments and details have been shown for the purpose of illustrating the subject invention, it will be apparent to those skilled in this art that various changes and modifications can be made therein without departing from the scope of the subject invention.

## Claims

1. A refrigerant hose which is **characterized by** being comprised of (a) a core layer, wherein the core layer is comprised of rubbery polymer; (b) a permeation inhibiting layer which is over the core layer, wherein the permeation inhibiting layer is comprised of a thermoplastic polymer; (c) a tie-layer which is over the permeation inhibiting layer, wherein the tie-layer is comprised of a butyl rubber; (d) a reinforcing layer which is over tie-layer, wherein the reinforcing layer is a woven fabric which is comprised of glass fibers, cotton fibers, polyester fibers, or aramid fibers; and (e) a cover layer which is over the reinforcing layer, wherein the cover layer is comprised of ethylene-propylene-diene monomer rubber.

2. The refrigerant hose as specified in claim 1 **characterized in that** the core layer is comprised of EPDM rubber, a blend of EPDM with butyl rubber, or a blend of EPDM rubber with halobutyl rubber.

3. The refrigerant hose as specified in claim 1 or 2 **characterized in that** the permeation inhibiting layer is comprised of one or more layers of nylon.

4. The refrigerant hose as specified in claim 1 **characterized in that** the reinforcement layer is a woven polyester fabric.

5. The refrigerant hose as specified in claim 4 **characterized in that** the woven polyester fabric is a woven polyethylene terephthalate fabric.

6. The refrigerant hose as specified in claim 4 **characterized in that** the woven polyester fabric is woven in a 1-over/1-under pattern.

7. The refrigerant hose as specified in any of the preceding claims **characterized in that** the cover layer includes pin-pricks.

8. A refrigerant hose as specified in any of the preceding claims **characterized in that** the hose has a permeation rate of not greater than 0.0020 g/cm/day of R134 refrigerant.

9. The refrigerant hose as specified in any of the preceding claims **characterized in that** the core layer has a thickness which is within the range of 0.025 inch to 0.030 inch, **characterized in that** the permeation inhibiting layer has a thickness which is within the range of 0.05 mm to 0.25 mm, **characterized in that** the tie-layer has a thickness which is within the range of 0.51 mm to 1.27 mm, and **characterized in that** the cover layer has a thickness which is within the range of 0.76 mm to 2.03 mm.

10. The refrigerant hose as specified in any of the preceding claims **characterized in that** the core layer is comprised of natural rubber.

11. The refrigerant hose as specified in claim 4 wherein the nylon is selected from the group consisting of nylon 6, nylon 66, nylon 46, nylon 11, nylon 12, nylon 610, nylon 612, nylon 6/66 copolymer, nylon 6/66/610 copolymer, nylon MXD6, nylon 6T, nylon 6/6T copolymer, nylon 66/PP copolymer, and nylon 66/PPS copolymer.

12. The refrigerant hose as specified in claim 3, 4, 5, 6, or 11 **characterized in that** the nylon is non-plasticized.

13. The refrigerant hose as specified in claim 3, 4, or 6 **characterized in that** the nylon is selected from the group consisting of PA6, PA66, PA610, PA612, and PA11.

14. The refrigerant hose as specified in any of the preceding claims **characterized in that** the hose has an inside diameter which is within the range of 5 mm to 30 mm.

15. The refrigerant hose as specified in any of the preceding claims **characterized in that** the hose has an inside diameter which is within the range of 6 mm to 25 mm
